# EUROPÄISCHE PATENTSCHRIFT

(11) **EP 2 626 382 B1**
(45) Veröffentlichungstag und Bekanntmachung des Hinweises auf die Patenterteilung: **06.06.2018**
(21) Anmeldenummer: 12290044.2
(22) Anmeldetag: 08.02.2012
(51) Int. Cl.: C08K 3/00, C08K 3/22, C08L 23/10, H01B 3/02, H01B 7/295, C01F 7/02

(54) **Flammbeständige halogenfreie Polymermischung**
Fire-retardant halogen-free polymer mixture
Mélange de polymère ignifuge non-halogéné

(43) Veröffentlichungstag der Anmeldung: 14.08.2013
(73) Patentinhaber: Nexans, 92400 Courbevoie (FR)
(72) Erfinder: Fascella, Claudio, 91126 Schwabach (DE); Dinkelmeyer, Christof, 91207 Lauf (DE); Niederwieser, Joachim, 91154 Roth (DE)
(74) Vertreter: Lenne, Laurence

(56) Entgegenhaltungen:
- EP-A1- 0 253 635
- EP-A1- 0 537 013
- EP-A1- 1 380 540

## Beschreibung

Die Erfindung betrifft eine halogenfreie Polymermischung gemäß dem Oberbegriff des Patentanspruchs 1.

Die EP 0 253 635 A1 beschreibt eine halogenfreie Polymermischung, welche gemahlenes Aluminiumhydroxid und ein thermoplastisches Polymer mit Propyleneinheiten enthält. Das Aluminiumhydroxid soll als Füllmaterial eingesetzt werden. Dabei sollen pro 100 Teile thermoplastisches Polymer 150 Teile Aluminiumhydroxid entsprechend 150 phr verwendet werden. Die spezifische Oberfläche des Aluminiumhydroxids liegt zwischen 25 m²/g und 45 m²/g. Die Mischung soll für Isolierungen und/oder Mäntel von elektrischen Kabeln oder Leitungen eingesetzt werden.

Aus der EP 0 537 013 A1 geht eine halogenfreie Polymermischung hervor, die im wesentlichen Silikonöl, ein in demselben lösbares Harz und Magnesiumhydroxid enthält. Die Druckschrift beschreibt außerdem eine Mischung aus 100 phr Polypropylen mit 75 phr Aluminiumhydroxid Micral 855 und 25 phr SFR 100. Das Micral 855 hat einen mittleren Partikeldurchmesser von 2 µm.

Die Aufgabe der Erfindung liegt in der Bereitstellung einer halogenfreien Polymermischung, die als Flammschutzmittel eine Alternative zu gefälltem Aluminiumhydroxid enthält.

Diese Aufgabe wird entsprechend der im Kennzeichen des Patentanspruchs 1 angegebenen Zusammensetzung gelöst.

Die halogenfreie Polymermischung ist insbesondere zur Verwendung als Mantel von Kabeln oder Leitungen geeignet. Sie weist ein optional vernetzbares Polymer auf, das ein Polypropylen-alkylen-copolymer ist, dessen Alkylengruppen vorzugsweise Ethylengruppen sind und das bevorzugt Polypropylen ist, sowie optional ein Alkylen-Vinylacetat-Copolymer, vorzugsweise mit zumindest 12 bis zumindest 40 Gew.-%, bevorzugter zumindest 70 Gew.-% Vinylacetateinheiten, und/oder ein Polyolefin, z.B. Polyethylen, oder bestehen daraus.

Die Polymermischung enthält als Flammschutzmittel Aluminiumhydroxid (auch als Aluminiumtrihydroxid (ATH) bezeichnet), das gemahlen ist. Das Flammschutzmittel kann Magnesiumhydroxid in Mischung mit gemahlenem Aluminiumhydroxid enthalten oder aus einer Mischung dieser bestehen. Bevorzugt besteht das Flammschutzmittel aus gemahlenem Aluminiumhydroxid.

Die Polymermischung hat den Vorteil, daß ausreichende mechanische Festigkeiten mit einer flammbeständigen und halogenfreien Mischung erreicht werden, wobei ein billigerer mineralischer Zuschlagstoff als Flammschutzmittel enthalten ist, als gefälltes ATH.

Es hat sich gezeigt, dass ohne Vernetzung ausreichende mechanische Eigenschaften der Mischung erreicht werden, deren Gehalt an Aluminiumhydroxid (ATH) aus gemahlenem Aluminiumhydroxid besteht, wenn der Polymerbestandteil Polypropylen-alkylen-copolymer, bevorzugt Polypropylen, ist, und optional Polyalkylen-vinylacetat-copolymer und optional alternativ oder zusätzlich ein Polyolefin, z.B. Polyethylen. Bevorzugt weist die Mischung keine Vernetzungsmittel auf, z. B. keine Peroxidverbindung und keinen Co-Aktivator. Entsprechend weist ein Kabel die extrudierte Mischung unvernetzt auf und wird insbesondere ohne Behandlung dieser Mischung zur anschließenden Vernetzung hergestellt, z. B. ohne Behandlung durch Wärme oder Bestrahlung.

Ein bevorzugtes Polypropylen-alkylen-copolymer ist Polypropylen-alkylenblockcopolymer, insbesondere Polypropylen-ethylen-copolymer, bevorzugt ein Polypropylen-ethylenblockcopolymer, das bevorzugt einen Gehalt an Ethyleneinheiten von 15 bis 16 Gew.-% hat (z.B. bestimmt nach ASTM D3900), weiter bevorzugt ein Biegemodul von 6,3 bis 40,2 MPa, z. B. 8 - 30 MPa, bevorzugt 8,5 bis 12 MPa, z. B. 11,4 MPa, nach ISO 178 (23° C), mit einer Zugfestigkeit von 8,1 bis 18,2 MPa, z. B. 8,1 bis >8,3 MPa, weiter bevorzugt eine Bruchdehnung von 860 % bis zumindest 2000 % (bei 23° C nach ISO 37), insbesondere mit den folgenden Eigenschaften: Dichte von 0,861 bis 0,863 kg/L, z. B. bestimmt nach ASTM D1505, einen Schmelzindex von 1 bis 8 g/10min, bevorzugt 1,3 bis 7,4 g/10min, eine Fließgeschwindigkeit der Schmelze nach ASTM D1238 von 3 bis 20, bevorzugt bis 18 g/10min und optional eine Mooney Viskosität von 23 bei 125° C nach ASTM D1646.

Ein bevorzgtes Alkylen-Vinylacetat-Copolymer ist Ethylen-Vinylacetat-Copolymer, erhältlich unter den Bezeichnungen EVA, EVAC und EVM, besonders bevorzugt mit einem Gehalt an Vinylacetateinheiten von zumindest 12 Gew.%, zumindest 50 Gew.-%, 60 Gew.-% und/oder 70 Gew.-%, sowie Mischungen dieser.

Ein bevorzugtes Polyolefin ist Polyethylen.

Es hat sich gezeigt, dass die Bestandteile der Polymermischung mit deren weiteren Bestandteilen, insbesondere gemahlenem Aluminiumhydroxid als Flammschutzmittel, optional einem weiteren Flammschutzmittel, z. B. Magnesiumhydroxid, optional Kaolin, Weichmacher, Alterungsschutzmittel, UV-Stabilisator, sowie optional Farbstoff und/oder Verarbeitungshilfsmittel nach Mischen und thermoplastischem Ausformen, z. B. durch Extrusion, eine hohe mechanische Beständigkeit aufweist, z. B. eine hohe Zugfestigkeit und Reißdehnung, die die Polymermischung für die Verwendung als Bestandteil von Kabeln und Leitungen geeignet machen, z. B. als halogenfreies Isoliermaterial oder als halogenfreier Mantel.

Das gemahlene Aluminiumhydroxid hat eine spezifische Oberfläche (BET) von ca. 5 bis 15 m²/g, optional bis 8 m²/g, bevorzugt von mindestens 8 m²/g, bevorzugter mindestens 10 m²/g, noch bevorzugter 11,5- 15,0 m²/g, insbesondere bestimmt nach DIN 9277. Das gemahlene Aluminiumhydroxid hat eine mittlere Korngröße von 2,5 µm bis 5,5 µm oder von 2,5 µm bis 3,5 µm nach ISO 13320-1.

Bevorzugt weisen erfindungsgemäße Polymermischungen, insbesondere Kabelisolierungen und Kabelmäntel daraus, eine geringe Wasseraufnahme, z. B. von maximal 15 mg/cm² bei 70° C über 168 h (insbesondere gemäß IEC 60811-1-3; 9-2) auf, besonders bevorzugt eine hohe Flammbeständigkeit z. B. gegen eine Flammdauer von 480 s (insbesondere gemäß IEC 60332-1-2), noch bevorzugter in Kombination mit einer geringen Korrosivität, z. B. einem pH von maximal 4,5 und weiter bevorzugt eine maximale Leitfähigkeit von 10 µS/mm (insbesondere gemäß IEC 60754-1/-2).

Bevorzugt weist die Polymermischung als Polymere
0 bis 50 phr Polyethylen,
0 bis 50 phr Polyalkylen-vinylacetat-copolymer,
20 bis 100 phr Polypropylen-ethylen-copolymer und/oder Polypropylen auf, oder die Polymere der Mischung bestehen daraus.

Bevorzugte Bestandteile bzw. Zuschlagstoffe der Polymermischung, die neben den Polymeren enthalten sind, sind
- als Flammschutzmittel gemahlenes Aluminiumhydroxid, optional zusätzlich Magnesiumhydroxid und/oder Magnesiumcarbonat, zu insgesamt 50 bis 250 phr, bevorzugt 100 bis 200 phr, bevorzugter 150 - 170 phr, insbesondere 160 phr,
- optional mineralischer Füllstoff z. B. ausgewählt aus Kreide und Kaolin, insbesondere ausgewählt aus kalziniertem Kaolin, Hart-Kaolin, Weich-Kaolin und/oder Talkum zu 0 bis 100 phr, insbesondere bestehend aus 0 bis 100 phr Kreide,
- 0 bis 10 phr Additive umfassend oder bestehend aus Alterungsschutzmittel, UV-Stabilisator, Farbstoff und Verarbeitungshilfsmittel, wobei der Weichmacher insbesondere Adipat und/oder Sebacat, insbesondere Di-2-octylsebacat ist, das Alterungsschutzmittel beispielweise TMQ (2,2,4-Trimethyl-1,2-dihydrochinolin), ZMBI (Zinksalz des 2 Mercaptobenzimidazols), MMBI (Methylmercaptobenzimidazol), ZMMBI (Zinksalz des 4und 5-Methyl-2-mercaptobenzimidazols), Kombinationen von TMQ mit ZMBI, MMBI und ZMMBI, SDPA (styrolisiertes Diphenylamin), andere ASM (Klasse der substituierten Diphenylamine), vorzugsweise SDPA ist, der Farbstoff beispielsweise Pigmente, z. B. Ruß oder Titandioxid mit einem UV-Stabilisator für helle Farben, z. B. zu 1 bis 5 phr ist, das Verarbeitungsmittel, insbesondere Wachse, Carbonsäureamide, Stearinsäure, Fettsäurederivate und/oder andere für EVAC-Mischungen geeignete Verbindungen, vorzugsweise Carnaubawachs oder eine Kombination aus Stearinsäure und 2,2-Iminodiethanol (Polyplastol 51), z. B. zu 3 bis 10 phr, bevorzugt 5 bis 7 phr ist.

Die in den Angaben zur Polymermischung angegebenen Teile sind als phr (parts per hundred rubber) zu verstehen, d. h. die Gewichtsteile der Bestandteile sind auf 100 Teile der vernetzbaren Bestandteile in der Mischung bezogen.

Für die optionale Vernetzung kann die Mischung zusätzlich als Vernetzungssystem eine Peroxidverbindung enthalten, beispielweise [1,3(oder 1,4)-phenylenbis(1methylenthyliden)]bis[tertbutyl]peroxid, bevorzugt mit einem Co-Aktivator, vorzugsweise einem Triallylcyanurat, z. B. 2,4,6-Tris(allyloxy)-1,3,5-triazin und weiter optional alternativ oder zusätzlich einen Co-Aktivator in Verbindung mit der Bestrahlung der Mischung mit ionisierender Strahlung aufweisen oder daraus bestehen.

Die Erfindung wird im Folgenden an Hand von Beispielen beschrieben, die mechanische Eigenschaften erfindungsgemäßer thermoplastischer Polymermischungen zeigen. Erfindungsgemäße Polymermischungen und Vergleichsmischungen wurden durch Mischen der in der nachfolgenden Tabelle in phr angegebenen Inhaltsstoffe nach Vormischung in einer Stufe in einem 2 Liter-Laborkneter mit einem Kneterfüllfaktor von 0,7 hergestellt.

**Tabelle: Zusammensetzung von halogenfreien flammbeständigen Polymermischungen**

| | **Vergleichsmischung** | | **Mischung** | | |
|---|---|---|---|---|---|
| **Bestandteil [phr]** | **1** | **2** | **3** | **4** | **5** |
| EVA | 65 | 65 | 0 | 25 | 40 |
| Polyethylen (PE) | 35 | 35 | 35 | 35 | 35 |
| Polypropylen-ethylen-copolymer | 0 | 0 | 65 | 40 | 25 |
| ATH, gefällt | 160 | 0 | 0 | 0 | 0 |
| ATH, gemahlen | 0 | 160 | 160 | 160 | 160 |
| Kreide | 30 | 30 | 30 | 30 | 30 |
| | | | | | |
| Additive (Alterungsschutzmittel, Weichmacher, UV-Stabilisator, Farbstoff und/oder Verarbeitungshilfsmittel) | 5 | 5 | 5 | 5 | 5 |
| Dichte | 1,56 | 1,56 | 1,50 | 1,52 | 1,53 |
| Summe phr | 295 | 295 | 295 | 295 | 295 |

Die Mischungen wurden als Mantel eines Kabels bzw. als Isolierung eines Leiters extrudiert. Die Festigkeitswerte wurden an Probestücken bestimmt.

### Mechanische Festigkeit der vernetzten Mischungen

| | **Vergleichsmischung** | | **Mischung** | | |
|---|---|---|---|---|---|
| | **1** | **2** | **3** | **4** | **5** |
| Zugfestigkeit (MPa) | 11,0 | 10,8 | 8,1 | 9,2 | 10,3 |
| Reißdehnung (%) | 190 | 35 | 257 | 171 | 163 |

In den Beispielmischungen ist Escorene® (erhältlich von Exxon Mobil Chemical) als EthylenVinylacetat-Copolymer (EVA) eingesetzt, das etwa 28 Gew.-% VinylacetatEinheiten enthält.

Als Polypropylen-ethylen-copolymer wurde Vistamaxx (erhältlich von Exxon Mobil Chemical) eingesetzt.

Gemahlenes ATH war Reflamal S30 (spez. Oberfläche (BET) 11,5-15,0m²/g, mittlere Korngröße 2,5-3,5µm, erhältlich von DADCO Alumina & Chemicals LTd), gefälltes ATH war Martinal OL-104 LEO (spez. Oberfläche (BET) 3-5m²/g, mittlere Korngröße 1,7-2,1 µm erhältlich von Martinswerk GmbH, Bergheim).

Die Ergebnisse zeigen, dass Polymermischungen auf Basis von EVA und PE mit ATH nur mit gefälltem ATH eine hohe Zugfestigkeit und Reißdehnung haben, während gemahlenes ATH in ansonsten derselben Mischung zu drastisch niedrigeren Werten führt.

Erst Mischungen, die ein Polymer mit Propyleneinheiten enthalten, weisen mit gemahlenem ATH als Flammschutzmittel hohe Festigkeitswerte auf.

Überdies zeigen die Beispiele, dass die erfindungsgemäßen Mischungen auch ohne einen Gehalt an Peroxid und/oder Co-Aktivator und ohne Vernetzung ausreichend hohe Festigkeiten und Flammbeständigkeiten aufweisen, z. B. nach Mischen und Ausformen, insbesondere durch Extrusion.

## Patentansprüche

1. Halogenfreie Polymermischung zur Verwendung für Isolierungen und/oder Mäntel von elektrischen Kabeln oder Leitungen, auf Basis zumindest eines thermoplastischen Polymers und mit einem Gehalt an Aluminiumhydroxid als Flammschutzmittel, **dadurch gekennzeichnet,**
- **dass** ein thermoplastisches Polymer mit der Zusammensetzung
- 0 bis 50 phr Ethylenvinylacetatcopolymer,
- 0 bis 50 phr Polyethylen,
- 20 bis 100 phr Polypropylen-ethylen-copolymer und/oder Polypropylen,
- 100 bis 250 phr gemahlenes Aluminiumhydroxid,
- 0 bis 100 phr mineralischen Füllstoff,
- 0 bis 10 phr Additive, umfassend Alterungsschutzmittel, UV-Stabilisator, Farbstoff und/oder Verarbeitungshilfsmittel verwendet wird,
- **dass** das gemahlene Aluminiumhydroxid eine spezifische Oberfläche (BET) von 5,0 m²/g- 15,0 m²/g nach DIN 9277 und eine mittlere Korngröße von 2,5 µm - 5,5 µm nach ISO 13320-1 aufweist und
- **dass** eine als Isolierung und/oder Mantel auf elektrische Kabel oder Leitungen durch Extrudieren aufgebrachte Schicht aus der dieses Polymer enthaltenden Polymermischung eine Zugfestigkeit von mindestens 8 MPa bei Raumtemperatur und eine Reißdehnung von mindestens 125 % aufweist.

2. Polymermischung nach Anspruch 1, **dadurch gekennzeichnet, dass** das gemahlene Aluminiumhydroxid eine spezifische Oberfläche (BET) von ca. 10-15,0 m²/g nach DIN 9277 aufweist.

3. Polymermischung nach Anspruch 1 oder 2, **dadurch gekennzeichnet, dass** das Polypropylen-ethylen-copolymer ein Polypropylen-ethylen-blockcopolymer ist, das einen Gehalt an Ethyleneinheiten von 15 bis 16 Gew.-%, ein Biegemodul von 6,3 bis 40,2 MPa und eine Zugfestigkeit von 8,1 bis 18,2 MPa aufweist.

## Claims

1. Halogen-free polymer mixture for use in insulation and/or coating of electrical cables or lines, based on at least one thermoplastic polymer, and containing aluminium hydroxide as a flame retardant, **characterised in that**:
- a thermoplastic polymer having the following composition:
- 0-50 phr ethylene-vinyl acetate copolymer
- 0-50 phr polyethylene
- 20 - 100 phr polypropylene-ethylene copolymer and/or polypropylene
- 100 - 250 phr ground aluminium hydroxide,
- 0-100 phr mineral filler,
- 0-10 phr additives, comprising anti-ageing agents, UV stabilisers, colourants, and/or processing aids, are used,
- the ground aluminium hydroxide has a specific surface (BWT) of rer 5.0 m2/g - 15,0 m2/g according to DIN 9277 and an average granular size of 2.5 - 5.5 µm according to ISO 13320-1, and
- that a coating of the polymer mixture containing this polymer, applied to electrical cables or lines by means of extrusion for the purpose of insulation and/or coating, has a tensile strength of at least 8 MPa at room temperature and an elongation at break of at least 125%.

2. Polymer mixture according to claim 1, **characterised in that** the ground aluminium hydroxide has a specific surface (BET) of app. 10 - 15.0 m2/g according to DIN 9277.

3. Polymer mixture according to claim 1 or 2, **characterised in that**:
the polypropylene-ethylene copolymer is a polypropylene-ethylene block copolymer having an ethylene unit content of 15 - 16 wt. %, a flexural modulus of 6.3 - 40.2 MPa, and a tensile strength of 8.1 - 18.2 MPa.

## Revendications

1. Mélange de polymères non halogénés destiné à une utilisation pour des isolations et/ou des gainages de câbles ou de lignes électriques, à base d'au moins un polymère thermoplastique et présentant une certaine teneur en hydroxyde d'aluminium servant d'agent d'ignifugation, **caractérisé**
- **en ce qu'**on utilise un polymère thermoplastique ayant la composition suivante :
- 0 à 50 phr d'un copolymère éthylène/acétate de vinyle,
- 0 à 50 phr de polyéthylène,
- 20 à 100 phr d'un copolymère polypropylène-éthylène, et/ou de polypropylène,
- 100 à 250 phr d'hydroxyde d'aluminium broyé,
- 0 à 100 phr d'une charge minérale,
- 0 à 10 phr d'additifs comprenant des agents de protection contre le vieillissement, un stabilisant UV, un colorant et/ou un auxiliaire de mise en oeuvre,
- **en ce que** l'hydroxyde d'aluminium broyé présente une aire spécifique (BET) de 5,0 m²/g à 15,0 m²/g selon DIN 9277 et une granulométrie moyenne de 2,5 µm à 5,5 µm selon ISO 13320-1,
- et **en ce qu'**une couche appliquée par extrusion, en tant qu'isolation et/ou gainage, sur des câbles ou des lignes électriques, constituée du mélange de polymères contenant ce polymère, présente une résistance à la traction d'au moins 8 MPa à la température ambiante, et un allongement à la rupture d'au moins 125 %.

2. Mélange de polymères selon la revendication 1, **caractérisé en ce que** l'hydroxyde d'aluminium broyé présente une aire spécifique (BET) d'environ 10 à 15,0 m²/g selon DIN 9277.

3. Mélange de polymères selon la revendication 1 ou 2, **caractérisé en ce que** le copolymère polypropylène-éthylène est un copolymère à blocs polypropylène-éthylène, qui présente une teneur en motifs éthylène de 15 à 16 % en poids, un module d'élasticité en flexion de 6,3 à 40,2 MPa, et une résistance à la traction de 8,1 à 18,2 MPa.
